# EUROPÄISCHE PATENTSCHRIFT

(11) **EP 3 460 600 B1**
(45) Veröffentlichungstag und Bekanntmachung des Hinweises auf die Patenterteilung: **28.07.2021**
(21) Anmeldenummer: 17192515.9
(22) Anmeldetag: 22.09.2017
(51) Int. Cl.: G05B 19/048

(54) **VORRICHTUNG, MASCHINENNETZWERK UND VERFAHREN ZUM VERARBEITEN UND SPEICHERN DIGITALER SPRACHEINGABEN IM UMFELD EINER BEARBEITUNGSMASCHINE**
DEVICE, MACHINE NETWORK AND METHOD FOR PROCESSING AND STORAGE OF DIGITAL SPEECH ITEMS IN THE VICINITY OF A PROCESSING MACHINE
DISPOSITIF, RÉSEAU DE MACHINES ET PROCÉDÉ DE TRAITEMENT ET D'ENREGISTREMENT D'ENTRÉES VOCALES NUMÉRIQUES DANS L'ENVIRONNEMENT D'UNE MACHINE À USINER

(43) Veröffentlichungstag der Anmeldung: 27.03.2019
(73) Patentinhaber: Klingelnberg GmbH, 42499 Hückeswagen (DE)
(72) Erfinder: Meuris, Daniel, 58456 Witten (DE)
(74) Vertreter: Janke Scholl Patentanwälte PartG mbB

(56) Entgegenhaltungen:
- EP-A2- 2 221 690
- DE-A1-102012 217 573
- US-A1- 2013 278 631

## Beschreibung

Die Erfindung betrifft ein Verfahren und Vorrichtungen zur Verarbeitung und/oder Speicherung von digitalen Spracheingaben im Umfeld einer Bearbeitungsmaschine. Insbesondere geht es um das Speichern digitaler Spracheingaben bei einer Verzahnungsmaschine, die zum Bearbeiten von Zahnrad-Werkstücken mit einem Werkzeug ausgelegt ist. Weiterhin geht es auch um Maschinennetzwerke.

### HINTERGRUND DER ERFINDUNG

Es ist bekannt, dass heutige Produktions- und Bearbeitungsabläufe immer komplexer werden. Entsprechend technisch komplex sind auch die Bearbeitungsmaschinen. Mit zunehmender Komplexität wird der Montage- und Wartungsaufwand immer grösser und die Anforderungen an Personal, das z.B. für die Wartung solcher Bearbeitungsmaschinen zuständig ist, steigen zunehmend an.

Diese Aussagen treffen vor allem auf die Bearbeitung von Zahnrädern zu, die mittlerweile in einer Fertigungsumgebung stattfindet, die meist mehrere hochgenau arbeitende, teil- oder vollautomatisierte Bearbeitungsmaschinen umfasst.

Hinzu kommen immer genauer werdende Vorgaben in Sachen Produktionsqualität und strenge Zeitvorgaben für das Warten oder Reparieren von Bearbeitungsmaschinen, da jeder Ausfall einer Maschine die Produktivität reduziert.

Das Dokument DE 10 2012 217 573 A1 beschreibt ein Bediensystem für eine Maschine. Das Dokument EP 2 221 690 A2 beschreibt eine Werkzeugmaschine und ein Verfahren zum Bearbeiten eines Werkstücks. Das Dokument US 2013/0278631 A1 beschreibt ein System mit einer Displaybrille.

Es ist daher eine Aufgabe der Erfindung eine Vorrichtung und ein entsprechendes Verfahren bereit zu stellen, die es ermöglichen im Rahmen der Wartung oder Reparatur gewisse Abläufe einfacher zu gestalten.

Ausserdem ist es eine Aufgabe der Erfindung eine Vorrichtung und ein entsprechendes Verfahren bereit zu stellen, die dabei helfen die Information, die bei einer Wartung oder Reparatur gewonnen wird, einfacher aufbereiten und/oder auswerten zu können.

Die Aufgabe wird durch eine Vorrichtung gemäß Anspruch 1 und durch ein Verfahren gemäß Anspruch 10 gelöst.

Die Erfindung betrifft insbesondere eine Vorrichtung, die umfasst:
- eine Bearbeitungsmaschine, insbesondere eine Verzahnungsmaschine, zum Bearbeiten von Zahnrad-Werkstücken mit einem Werkzeug, wobei die Bearbeitungsmaschine mehrere numerisch gesteuerte Antriebe umfasst,
- eine Maschinensteuerung, die zum Steuern der Antriebe ausgelegt ist,
- einen Rechner, der mit der Bearbeitungsmaschine in Kommunikationsverbindung steht oder bringbar ist,
- mindestens ein Mikrofon, das mit dem Rechner in Kommunikationsverbindung steht oder bringbar ist,
- eine Spracherkennungssoftware, die auf dem Rechner lauffähig ist, und die dazu ausgelegt ist eine analoge Spracheingabe, die mittels des mindestens einen Mikrofons erfolgt, in eine digitale Spracheingabe zu übersetzen,
wobei die Vorrichtung einen Speicher zum (Zwischen-)Speichern der digitalen Spracheingaben umfasst.

Der Einsatz eines Mikrofons zusammen mit einer Spracherkennungssoftware, die auf einem Rechner lauffähig ist, der Teil der Bearbeitungsmaschine ist, oder der mit der Bearbeitungsmaschine verbindbar ist, ermöglicht es einer Person, die z.B. Wartungs- oder Reparaturarbeiten an der Bearbeitungsmaschine durchführt, ohne Behinderung und Einschränkung Sprachaufzeichnungen zu machen.

Als Bearbeitungsmaschine gelten hier sämtliche Vorrichtungen und Apparaturen, die bei der Herstellung, Bearbeitung, Handhabung und beim Testen von Verzahnungen zum Einsatz kommen. Dazu gehören unter anderem Schleif-, Fräs-, Hon-, Schäl-, Schneid-, Schäl- und Stossmaschinen sowie Läppmaschinen, Tester, Koordinatenmessmaschinen usw.

Es ist ein Vorteil der Erfindung, dass solche Sprachaufzeichnungen vorgenommen werden können, während die Person an der Maschine arbeitet. Insbesondere können quasi in Echtzeit während der Wartungs- oder Reparaturarbeiten Sprachaufzeichnungen vorgenommen werden, ohne dass dazu manuelle Eingaben oder andere Interventionen erforderlich sind.

Die Erfindung bietet erstmals die Möglichkeit arbeitsbegleitende Aufzeichnungen zu machen, die detailliert und ausführlich sein können.

Ein weiterer wichtiger Aspekt der Erfindung liegt in der digitalen Umsetzung der Spracheingaben. Diese Spracheingaben erfolgen durch das Sprechen in ein Mikrofon, das von der Person getragen wird (z.B. als Teil eines Head-Sets), oder das an der Bearbeitungsmaschine (z.B. an einem Schwanenhals-Stativ) angeordnet ist. Diese Spracheingaben erfolgen in analoger Form. Die entsprechenden analogen Signale werden dann gemäß Erfindung in digitale Spracheingaben übersetzt im Sinne von umgewandelt.

Erst diese Umsetzung in digitale Spracheingaben ermöglicht ein einfaches und schnelles Speichern und/oder Bearbeiten der Information, die auf diesem Wege gewonnen wurde.

Außerdem können die digitalen Spracheingaben einfacher maschinell, d.h. automatisiert, aufbereitet und ausgewertet werden. Der Begriff des automatisierten Aufbereitens und Auswertens steht hier für ein rechnergestütztes Aufbereiten und Auswerten.

Dieses rechnergestützte Aufbereiten und Auswerten kann bei allen Ausführungsformen durch den bereits erwähnten Rechner erfolgen, der der Bearbeitungsmaschine zugeordnet ist, oder das Aufbereiten und/oder das Auswerten erfolgt durch einen anderen (entfernten) Rechner, z.B. durch einen Zentralrechner.

Vorzugsweise kommt bei allen Ausführungsformen eine drahtlose Verbindung als Kommunikationsverbindung zwischen dem Mikrofon und dem Rechner zum Einsatz. Eine solche drahtlose Verbindung erhöht den Bewegungsspielraum. Besonders bevorzugt sind Radiofrequenz (RF) Verbindungen und optisch Verbindungen (z.B. im infraroten Spektrum).

Vorzugsweise kommt bei allen Ausführungsformen eine Maschinensteuerung zum Einsatz, die so als eine autarke Maschinensteuerung ausgelegt ist, dass sie ohne Mitwirkung des Rechners die Antriebe der Bearbeitungsmaschine steuern kann. Das hat unter anderem den Vorteil, dass sich die Sprachaufzeichnung, die von dem Rechner gehandhabt wird, und die Steuerung der Antriebe nicht gegenseitig stören oder beeinflussen. Die Spracherkennung und Sprachaufzeichnung kann unter umständen sehr rechenintensiv sein. Daher ist eine solche Trennung von Rechner und Steuerung von Vorteil.

Vorzugsweise kommt bei allen Ausführungsformen mindestens ein Mikrofon zum Einsatz, das eine Geräuschunterdrückungsfunktion umfasst. Diese Geräuschunterdrückungsfunktion ist speziell dazu ausgelegt Störgeräusche zu unterdrücken, die im Bereich einer Bearbeitungsmaschine auftreten. Wenn z.B. die Bearbeitungsmaschine einen Testlauf durchführt, während die Person den Testlauf beobachtet und kommentiert, können durch die Geräuschunterdrückungsfunktion störende Maschinengeräusch (z.B. Antriebsgeräusche) unterdrückt werden.

Vorzugsweise ist die Vorrichtung bei allen Ausführungsformen mit einer Software ausgestattet, die eine Geräuschunterdrückung der analogen Spracheingabe oder der digitalen Spracheingabe ermöglicht. Diese Software kann bei allen Ausführungsformen z.B. auf dem genannten Rechner installiert sein, um dort ausgeführt zu werden.

Es kann bei allen Ausführungsformen auch eine Kombination eines Mikrofons mit Geräuschunterdrückungsfunktion und einer Software zur Geräuschunterdrückung zum Einsatz kommen.

Besonders bevorzugt sind Ausführungsformen, bei denen die Vorrichtung mittels einer Kommunikationsverbindung so mit einem entfernten Rechner (z.B. einem Zentralrechner) verbindbar ist, dass die digitalen Spracheingaben als Ganzes, oder als abgeleitete Information, die aus den digitalen Spracheingaben gewonnen wurde, diesem entfernten Rechner zur Verfügung gestellt werden kann. Diese Gesamtkonstellation ermöglicht in besonders vorteilhafter Art und Weise das Aufbereiten und/oder Auswerten von abgeleiteten Informationen, die in einer Fertigungsumgebung (z.B. an mehreren Bearbeitungsmaschinen der Fertigungsumgebung) per Spracheingabe erfasst wurden.

Bei allen Ausführungsformen, die eine Übergabe der digitalen Spracheingaben oder abgeleiteter Information an einen entfernten Rechner ermöglichen, kann eine Auswertungssoftware (hier Analysesoftware genannt) auf dem entfernten Rechner ausgeführt werden, um z.B. Datamining zu betreiben.

Anhand von Information, die durch diese Form des Dataminings gewonnen wird, kann z.B. eine Fertigungsumgebung besser verwaltet, vorausschauend gewartet und produktionsbegleitend gepflegt werden.

Die Spracherkennungssoftware der Vorrichtung ist bei allen Ausführungsformen speziell dazu ausgelegt, die digitalen Spracheingaben situativ abhängig unterschiedlich zu behandeln. D.h. z.B., dass während eines Testlaufs die Spracheingaben anders bearbeitet werden als Spracheingaben, die während einer Reparatur erfolgen. Bei diesen Vorrichtungen ist die Spracherkennungssoftware der Vorrichtung dazu programmiert die Situation zu erkennen, um dann entsprechende Regeln oder Filter zur Anwendung zu bringen.

Die Vorrichtung ist bei allen Ausführungsformen dazu ausgelegt, die Spracheingaben situativ unterschiedlich zu behandeln, wobei hier vordefinierte Regeln oder Filter zur Anwendung kommen. So kann z.B. als Regel vorgegeben werden, dass Spracheingaben während eines Testlaufs in ein Log-File geschrieben werden, während Spracheingaben, die während einer Reparatur erfolgen, an ein Ersatzteillager übermittelt werden.

So kann z.B. auch als Regel vorgegeben werden, dass Spracheingaben während eines Testlaufs durch Anwendung der Geräuschunterdrückungsfunktion (in Form von Hard- und/oder Software) aufbereitet werden, bevor sie zum Speicher gelangen.

Die Vorrichtung kann bei allen Ausführungsformen dazu ausgelegt sein die momentan vorherrschende Situation automatisch zu erkennen und die entsprechenden Regeln oder Filter automatisch zur Anwendung zu bringen.

Die Erfindung lässt sich besonders vorteilhaft in einer Fertigungsumgebung, hier auch als Maschinennetzwerk bezeichnet, zur Anwendung bringen.

Ein solches Maschinennetzwerk der Erfindung umfasst z.B.
- mindestens zwei der eingangs beschriebenen Vorrichtungen,
- einen entfernten Rechner (z.B. einen Zentralrechner),
- eine Kommunikationsverbindung zwischen einer ersten der mindestens zwei Vorrichtungen und dem entfernten Rechner,
- eine Kommunikationsverbindung zwischen einer zweiten der mindestens zwei Vorrichtungen und dem entfernten Rechner, und
- eine Analysesoftware, die auf dem entfernten Rechner lauffähig ist, wobei diese Analysesoftware dazu ausgelegt ist eine Auswertung der digitalen Spracheingaben vorzunehmen.

Die Analysesoftware kann z.B. dazu eingesetzt werden, um Datamining zu betreiben.

Die Vorrichtung kann bei allen Ausführungsformen so ausgelegt sein, dass sie zusätzlich (begleitend) zu den Spracheingaben und der Speicherung auch Maschinenparameter und/oder Zeitangaben erfasst und speichert. Dieses begleitende Speichern von Maschinenparametern und/oder Zeitangaben ermöglicht eine bessere Aufbereitung oder Auswertung der Daten.

Vorteilhafte Ausgestaltungen der erfindungsgemäßen Koordinaten-Messvorrichtung und des Verfahrens sind den abhängigen Ansprüchen zu entnehmen.

### ZEICHNUNGEN

Ausführungsbeispiele der Erfindung werden im Folgenden unter Bezugnahme auf die Zeichnungen näher beschrieben.
- **FIG. 1**: zeigt eine schematische Ansicht einer ersten Vorrichtung der Erfindung;
- **FIG. 2**: zeigt eine schematische Ansicht einer Mikrofonkonstellation mit Geräuschunterdrückung, die als Teil der Vorrichtung der Erfindung zum Einsatz kommen kann;
- **FIG. 3**: zeigt eine schematische Ansicht einer zweiten Vorrichtung der Erfindung mit zwei Mikrofonen - in einer anderen Mikrofonkonstellation als in Fig. 2 - zur Geräuschunterdrückung.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

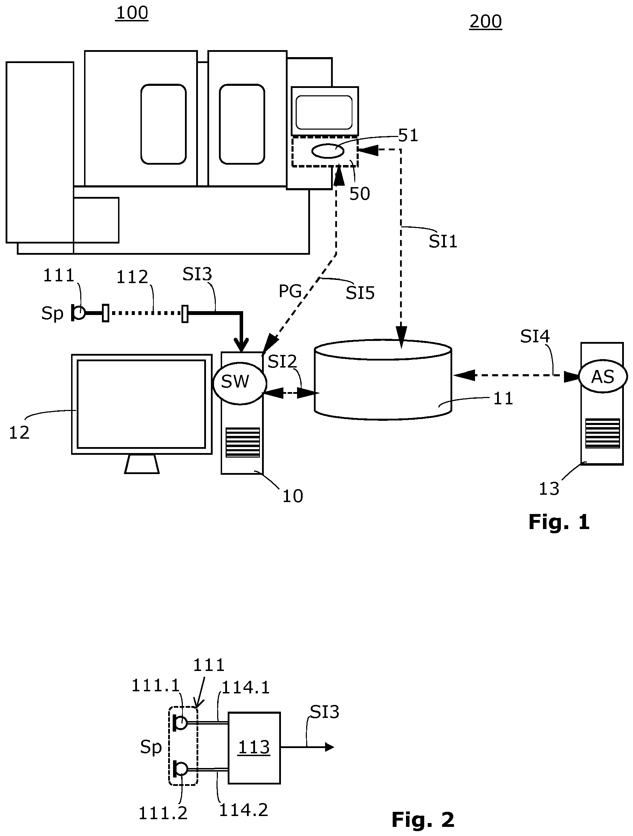

Eine Baugruppe, die hier als Maschinensteuerung 50 bezeichnet wird, regelt unter anderem die wesentlichen Abläufe in der Bearbeitungsmaschine 100. In Fig. 1 ist die Maschinensteuerung 50 durch einen strichliert umrandeten Funktionsblock dargestellt. Dazu gehören z.B. das Regeln der Stromaufnahme von elektrisch angetriebenen Motoren und andere steuerungstypische Abläufe, die einen direkten Eingriff in die Bearbeitungsmaschine 100 erfordern.

Eine "Maschinensteuerung" wird teilweise auch als SPS bezeichnet, was für Speicherprogrammierbare Steuerung steht (engl. Programmable Logic Controller, oder kurz PLC).

Eine Maschinensteuerung 50 ist im Sinne der Erfindung eine autarke Funktionseinheit, Baugruppe oder ein Baustein, der/die einen Controller 51 umfasst. Dieser Controller 51 ist programmierbar. Ein entsprechendes Programm PG definiert/beschreibt die Aufgaben (Befehle), die von der Maschinensteuerung 50 auszuführen sind. Das Programm PG kann z.B., wie in Fig. 1 anhand eines Beispiels schematisch angedeutet, von einem externen Rechner 10 über eine Schnittstelle SI5 an die Maschinensteuerung 50 übergeben werden.

Diese Schnittstelle SI5 kann alternativ oder zusätzlich auch zum Übergeben von Daten (z.B. Solldaten, Maschinendaten oder Neutraldaten) vom Rechner 10 an die Maschinensteuerung 50 dienen.

Das Programm PG kann bei allen Ausführungsformen, oder bei einem Teil der Ausführungsformen, z.B. mittels einer (Anwendung-)Software des Rechners 10 erstellt werden. Dieser Vorgang, der dazu dient ein Zahnrad oder eine Zahnradpaarung zu definieren, wird generell als Auslegung bezeichnet. Um eine Auslegung zu ermöglichen, kann der Rechner 10 einen Bildschirm 12 und ggfs. auch eine Tastatur (nicht gezeigt) umfassen.

Bei dem Rechner 10 kann es sich auch um einen Rechner handeln, der in de Bearbeitungsmaschine 100 integriert oder mit dieser direkt verbunden ist.

Es kann sich bei dem Rechner 10 auch um einen Rechner handeln, der einen Prozessor und andere Bausteine auf einer Platine umfasst.

Die vorliegende Erfindung ist davon unabhängig, ob das erwähnte Programm PG und/oder die erwähnten Daten als solches über die Schnittstelle SI5 an die Maschinensteuerung 50 übergeben und erst dort umgewandelt wird/werden in eine Art Maschinensprache, oder ob diese Umwandlung bereits vor der Übergabe an die Maschinensteuerung 50 erfolgt.

Wie in Fig. 1 gezeigt, können alle Ausführungsformen ein (externes oder internes) Speichermedium 11 umfassen, das funktional z.B. zwischen dem Rechner 10 und der Maschinensteuerung 50 angeordnet sein kann. Eine optionale Schnittstelle SI2 verbindet in diesem Fall den Rechner 10 mit dem Speichermedium 11. Eine optionale Schnittstelle SI1 verbindet in diesem Fall das Speichermedium 11 mit der Maschinensteuerung 50.

Das Wort "Steuerung" soll hier nicht einschränkend verstanden werden. Eine autarke Maschinensteuerung 50 ist im Sinne der Erfindung nämlich nicht nur in der Lage Antriebe anzusteuern, sondern auch Sensorgrössen auszulesen und zu verarbeiten. Um genauer zu sein, dient eine Maschinensteuerung 50 daher, im Sinne der Erfindung, zur koordinierten Regelung der Bearbeitungsabläufe der Bearbeitungsmaschine 100.

In der Praxis wird oft eine Unterscheidung gemacht zwischen der eigentlichen Steuerung und der numerischen Kontrollfunktion (engl. Numerical Control, oder kurz NC). Der Begriff "Maschinensteuerung" 50 ist im Sinne der Erfindung so zu verstehen, dass er entweder die eigentliche Steuerung oder die Steuerung und die numerische Kontrolle umfasst.

In jedem Fall dient die Maschinensteuerung 50 als Verarbeitungsvorrichtung zum Verarbeiten/Abarbeiten von Schritten, die durch ein Programm PG definiert/beschreiben sind. Einerseits dient die Maschinensteuerung 50 somit zum Schalten und/oder Stellen und/oder Antreiben der Bearbeitungsmaschine 100 und andererseits zum Aufnehmen und/oder Messen und/oder Umformen von Eingangsgrössen (Signalen), die von Sensoren der Bearbeitungsmaschine 100 geliefert werden.

Die Maschinensteuerung 50 kann bei allen oder bei einem Teil der Ausführungsformen eine oder mehrere Schnittstellen umfassen, die es ermöglicht über Kommunikationsverbindungen (z.B. über einen Maschinenbus) die Antriebe anzusteuern und/oder die Sensoren abzufragen.

Die Maschinensteuerung 50 kann bei allen oder bei einem Teil der Ausführungsformen einen Speicher umfassen, der als Programmspeicher für das Programm PG dient.

Die Maschinensteuerung 50 kann bei allen oder bei einem Teil der Ausführungsformen einen Speicher umfassen, der als Datenspeicher dient.

Die Maschinensteuerung 50 kann bei allen oder bei einem Teil der Ausführungsformen als zyklisch arbeitende Vorrichtung ausgelegt sein, die Zyklus für Zyklus einer vorbestimmten Standardroutine folgt.

Um in einer Bearbeitungsmaschine 100 eine Spracheingabe Sp zu ermöglichen, muss die Vorrichtung 200 oder die Bearbeitungsmaschine 100 mindestens ein Mikrofon 111 und Spracheingabemittel umfassen.

Die Spracheingabemittel können bei allen oder bei einem Teil der Ausführungsformen eine Kombination aus Hardware und Software umfassen. Sinn und Zweck der Spracheingabemittel ist das Umsetzen gesprochener Worte (hier als analoge Spracheingabe Sp bezeichnet) in eine digitale Spracheingabe SpD.

Im Sinne der Erfindung wird die Sprachsteuerung wie folgt realisiert. Ein Mikrofon 111 ist über einen Kommunikationsverbindung SI3 direkt oder indirekt mit dem Rechner 10 verbunden. Die Kommunikationsverbindung SI3 kann z.B. eine drahtlose Teilstrecke 112 umfassen.

Der Rechner 10 umfasst eine Spracherkennungssoftware SW, die auf dem Rechner 10 lauffähig ist. Diese Spracherkennungssoftware SW ist dazu ausgelegt eine analoge Spracheingabe Sp, die mittels des mindestens einen Mikrofons 111 erfolgt, in eine digitale Spracheingabe SpD zu übersetzen.

Die Vorrichtung 200 umfasst bei allen Ausführungsformen einen Speicher 11 zum Speichern der digitalen Spracheingaben SpD, wie in Fig. 1 gezeigt. Dieser Speicher 11 kann z.B. über eine Kommunikationsverbindung SI2 mit dem Rechner 10 in Kommunikationsverbindung stehen.

Der Rechner 10 und/oder der Speicher 11 kann bei allen oder bei einem Teil der Ausführungsformen auch in die Bearbeitungsmaschine 100 eingebaut sein. In diesem Fall kann z.B. ein interner Maschinenbus als Kommunikationsverbindung SI1, SI2, SI5 dienen.

Das Mikrofon 111 kann bei allen oder bei einem Teil der Ausführungsformen eine Geräuschunterdrückungsfunktion umfassen. Diese Geräuschunterdrückungsfunktion kann z.B. dazu ausgelegt sein, störende Nebengeräusche der Bearbeitungsmaschine 100 zu unterdrücken, respektive den Signal-Rausch-Abstand zu verbessern.

Das Mikrofon 111 kann bei allen oder bei einem Teil der Ausführungsformen z.B. zwei Mikrofone (z.B. zwei Elektret-Kapseln) und ein Modul zur Geräuschunterdrückung umfassen, das zur Fernfeld-Rauschunterdrückung ausgelegt ist. Im Einsatz werden die beiden Mikrofone relativ nahe am Körper getragen (z.B. weniger als 10 cm zum Mund der Person), wohingegen sich die Fernfeld-Rauschunterdrückung zu Nutze macht, dass die Maschinengeräusche typsicherweise in einem grösseren Abstand zu den beiden Mikrofonen auftreten. Um die Fernfeld-Rauschunterdrückung zu ermöglichen, sind die beiden Mikrofone ein kleines Stück voneinander beabstandet (z.B. 1 bis 2 cm). Signale im Nahbereich können so von Signalen im Fernbereich unterschieden werden.

In Fig. 2 ist eine beispielhafte Konstellation gezeigt, die zwei Mikrofone 111.1, 111.2 umfasst, die in einem Gehäuse zu einem Mikrofon 111 zusammengefasst sind. Der gegenseitige Abstand beträgt hier beispielsweise 1,5 cm. Jedes der beiden Mikrofone 111.1, 111.2 hat einen abgeschirmten Ausgang, 114.1, 114.2, um die Analogsignale an ein Rauschunterdrückungs-Modul 113 zu übermitteln. Das Rauschunterdrückungs-Modul 113 hat einen analogen oder digitalen Ausgang (je nach Implementierung des Moduls 113), der z.B. als Kommunikationsverbindung SI3 zum Verbinden mit dem Rechner 10 dient.

Es kann bei allen oder bei einem Teil der Ausführungsformen auch ein anderes Mikrofon 111 zum Einsatz kommen, das eine fokussiert auftretende Sprachquelle gegenüber diffus auftretenden Hintergrundgeräuschen verstärkt. Ein solches Mikrofon 111 kann z.B. zwei gegeneinander ausgerichtete Mikrofonkapseln umfassen.

Es kann bei allen oder bei einem Teil der Ausführungsformen zusätzlich zu den beschriebenen Mikrofonen 111, oder alternativ, eine Software vorhanden sein, die eine Geräuschunterdrückung der analogen Spracheingabe oder der digitalen Spracheingabe ermöglicht. Vorzugsweise ist diese Geräuschunterdrückungssoftware so ausgelegt, dass sie im digitalen Bereich der Vorrichtung 200 eine Rauschunterdrückung, z.B. anhand von Software-Filtern, vornimmt.

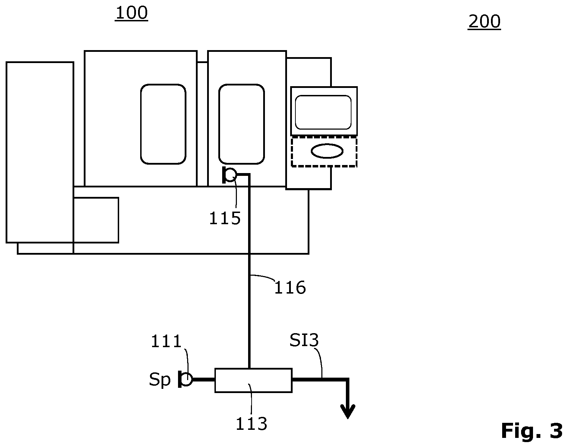

Es kann bei allen oder bei einem Teil der Ausführungsformen auch ein weiteres Mikrofon 115 unmittelbar an der Bearbeitungsmaschine 100 angeordnet sein, wie in Fig. 3 angedeutet. Dieses weitere Mikrofon 115 liefert über eine Verbindung 116 (z.B. ein abgeschirmtes Kabel) Störsignale an ein Rauschunterdrückungsmodul 113. Durch eine Differenzbildung kann das Nutzsignal, das vom Mikrofon 111 an das Rauschunterdrückungsmodul 113 geliefert wird, relativ zu den Störsignalen verstärkt werden.

In Fig. 1 ist weiterhin angedeutet, dass die Vorrichtung 200 optional einen entfernten Rechner 13 umfassen kann. Ein solcher entfernter Rechner 13 kann bei allen oder bei einem Teil der Ausführungsformen zum Einsatz kommen.

Die Vorrichtung 200 kann optional mittels einer Kommunikationsverbindung SI4 so mit dem entfernten Rechner 13 verbindbar sein, dass die digitalen Spracheingaben SpD als Ganzes, oder abgeleiteter (Teil-) Information, die aus den digitalen Spracheingaben SpD gewonnen wurde, dem entfernten Rechner 13 zur Verfügung gestellt werden kann. Diesem entfernten Rechner 13 kann optional ein weiterer Speicher (nicht gezeigt) zugeordnet sein.

Der entfernte Rechner 13 kann optional eine Analysesoftware AS umfassen, die auf dem entfernten Rechner 13 lauffähig ist. Diese Analysesoftware AS kann z.B. dazu ausgelegt sein eine Auswertung der digitalen Spracheingaben SpD vorzunehmen. Dieser Vorgang wird hier auch als Datamining bezeichnet.

Im Rahmen des Dataminings können z.B. die digitalen Spracheingaben SpD mehrerer Vorrichtungen 200 der Erfindung gesammelt ausgewertet werden, um Auffälligkeiten zu entdecken und um eine Aktion (z.B. ein verkürztes Wartungsintervall bestimmter Bearbeitungsmaschinen 100) auszulösen.

Die Vorrichtung 200 kann bei allen Ausführungsformen dazu ausgelegt sein die momentan vorherrschende Situation automatisch zu erkennen und die entsprechenden Regeln oder Filter automatisch zur Anwendung zu bringen. Zu diesem Zweck kann z.B. der Rechner 10 über mindestens eine Schnittstelle verfügen, die dazu ausgelegt ist den Betriebszustand der Bearbeitungsmaschine 100 zu erkennen. So ist der Rechner 10, respektive die Software SW, in der Lage automatisch die momentan vorherrschende Situation zu erkennen und dann die entsprechenden Regeln oder Filter automatisch zur Anwendung zu bringen.

Bei jeder der bisher beschriebenen Ausführungsformen werden im Rahmen einer Wartung oder Reparatur die folgenden Schritte ausgeführt:
- Aktivieren einer Spracherkennungssoftware SW auf dem Rechner 10, der der Bearbeitungsmaschine 100 zugeordnet ist,
- Durchführen eines Wartungs- oder Reparaturschrittes an der Bearbeitungsmaschine 100,
- Aufzeichnen von Spracheingaben Sp durch Spracheingabe über ein Mikrofon 111, das mit dem Rechner 10 verbunden ist,
- Umsetzen der Spracheingaben Sp in digitale Spracheingaben SpD,
- Speichern der digitale Spracheingaben SpD in einem Speicher 11,
- Verfügbarmachen der digitale Spracheingaben SpD zum Aufbereiten und/oder Auswerten. Im Rahmen dieses Schrittes kann z.B. die bereits erwähnte Analysesoftware AS zum Einsatz kommen.

### Bezugszeichen:

| | |
|---|---|
| Rechner / Computer / Prozessor | 10 |
| Datenbank / Speichermedium / Speicher | 11 |
| Bildschirm / Anzeiqe | 12 |
| Rechner | 13 |
| | |
| Maschinensteuerung/SPS/PLC | 50 |
| Controller | 51 |
| | |
| Bearbeitungsmaschine/ Verzahnungsmaschine | 100 |
| | |
| Mikrofone | 111, 111.1, 111.2 |
| drahtlose Verbindung | 112 |
| Rauschunterdrückung | 113 |
| abqeschirmte Verbindung | 114.1, 114.2 |
| Mikrofon | 115 |
| | |
| Vorrichtung | 200 |
| | |
| Analyse-/Auswertungssoftware | AS |
| Programm | PG |
| Schnittstelle (Hard- und/oder Software) / Kommunikationsverbindung | SI1, SI2, SI3, SI4, SI5 |
| Spracheingabe | Sp |
| digitale Spracheingabe | SpD |
| (Anwendungs-)Software | SW |
| Verzweigung | VZ1 |

## Patentansprüche

1. Vorrichtung (200) umfassend
- eine Bearbeitungsmaschine (100) zum Bearbeiten von Zahnrad-Werkstücken mit einem Werkzeug, wobei die Bearbeitungsmaschine (100) mehrere numerisch gesteuerte Antriebe umfasst,
- eine Maschinensteuerung (50), die zum Steuern der Antriebe ausgelegt ist,
- einen Rechner (10), der mit der Bearbeitungsmaschine (100) in Kommunikationsverbindung steht oder bringbar ist,
- mindestens ein Mikrofon (111), das mit dem Rechner (10) in Kommunikationsverbindung steht oder bringbar ist,
- eine Spracherkennungssoftware (SW), die auf dem Rechner (10) lauffähig ist, und die dazu ausgelegt ist eine analoge Spracheingabe (Sp), die mittels des mindestens einen Mikrofons (111) erfolgt, in eine digitale Spracheingabe (SpD) zu übersetzen,
wobei die Vorrichtung (200) einen Speicher (11) zum Speichern der digitalen Spracheingaben (SpD) umfasst, **dadurch gekennzeichnet, dass** die Spracherkennungssoftware (SW) dazu ausgelegt ist, die digitalen Spracheingaben (SpD), die während einer Wartung der Bearbeitungsmaschine (100) vorgenommen werden und die während eines Betriebs der Bearbeitungsmaschine (100) vorgenommen werden, unterschiedlich zu behandeln.

2. Vorrichtung (200) nach Anspruch 1, **dadurch gekennzeichnet, dass** eine drahtlose Verbindung (112) als Kommunikationsverbindung zwischen dem Mikrofon (111) und dem Rechner (10) dient.

3. Vorrichtung (200) nach Anspruch 1 oder 2, **dadurch gekennzeichnet, dass** das Mikrofon (111) am Körper einer Person tragbar ist.

4. Vorrichtung (200) nach Anspruch 1, 2 oder 3, **dadurch gekennzeichnet, dass** das Mikrofon (111) selbst eine Geräuschunterdrückungsfunktion umfasst, und/oder dass eine Software vorhanden ist, die eine Geräuschunterdrückung der analogen Spracheingabe (Sp) oder der digitalen Spracheingabe (SpD) ermöglicht.

5. Vorrichtung (200) nach einem der Ansprüche 1 bis 4, **dadurch gekennzeichnet, dass** es sich bei der Maschinensteuerung (50) um eine autarke Maschinensteuerung (50) handelt, die dazu ausgelegt ist ohne Mitwirkung des Rechners (10) die Antriebe der Bearbeitungsmaschine (100) zu steuern.

6. Vorrichtung (200) nach Anspruch 5, **dadurch gekennzeichnet, dass** der Rechner (10), mit der Maschinensteuerung (50) in Kommunikationsverbindung (SI5) steht oder bringbar ist, um vor dem Bearbeiten von Zahnrad-Werkstücken Daten von dem Rechner (10) an die Maschinensteuerung (50) übergeben zu können.

7. Vorrichtung (200) nach einem der Ansprüche 1 bis 4, **dadurch gekennzeichnet, dass** sie mittels einer Kommunikationsverbindung (SI4) so mit einem weiteren Rechner (13) verbindbar ist, dass die digitalen Spracheingaben (SpD) als Ganzes, oder Information, die aus den digitalen Spracheingaben (SpD) gewonnen wurde, dem weiteren Rechner (13) zur Verfügung stellen zu können.

8. Vorrichtung (200) nach Anspruch 5, **dadurch gekennzeichnet, dass** in dem Speicher (11) der Vorrichtung (200) und/oder in dem weiteren Rechner (13) ein digitales Log-Buch mit einer Sammlung von Spracheingaben geführt wird.

9. Maschinennetzwerk, das umfasst
- mindestens zwei Vorrichtungen (200) nach einem der Ansprüche 1 bis 4,
- einen weiteren Rechner (13),
- eine Kommunikationsverbindung (SI4) zwischen einer ersten der mindestens zwei Vorrichtungen (200) und dem weiteren Rechner (13),
- eine Kommunikationsverbindung (SI4) zwischen einer zweiten der mindestens zwei Vorrichtungen (200) und dem weiteren Rechner (13),
- eine Analysesoftware, die auf dem weiteren Rechner (13) lauffähig ist, wobei diese Analysesoftware dazu ausgelegt ist eine Auswertung der digitalen Spracheingaben (SpD) vorzunehmen.

10. Verfahren zum Durchführen einer Wartung oder Reparatur einer Vorrichtung (200), die eine Bearbeitungsmaschine (100) zum Bearbeiten von Zahnrad-Werkstücken mit einem Werkzeug, umfasst, mit den folgenden Schritten:
- Aktivieren einer Spracherkennungssoftware (SW) auf einem Rechner (10), der der Bearbeitungsmaschine (100) zugeordnet ist,
- Durchführen eines Wartungs- oder Reparaturschrittes an der Bearbeitungsmaschine (100),
- Aufzeichnen von Spracheingaben (Sp) durch Spracheingabe über ein Mikrofon (111), das mit dem Rechner (10) verbunden ist,
- Umsetzen der Spracheingaben (Sp) in digitale Spracheingaben (SpD),
- Speichern der digitale Spracheingaben (SpD) in einem Speicher (11),
- Verfügbarmachen der digitale Spracheingaben (SpD) zum Aufbereiten und/oder Auswerten, **dadurch gekennzeichnet, dass** die digitalen Spracheingaben (SpD), die während einer Wartung der Bearbeitungsmaschine (100) vorgenommen werden und die während des Betriebs der Bearbeitungsmaschine (100) vorgenommen werden, unterschiedlich behandelt werden.

11. Verfahren nach Anspruch 11, **dadurch gekennzeichnet, dass** beim Aufzeichnen von Spracheingaben (Sp) eine Geräuschunterdrückung zur Anwendung kommt, um die Spracheingaben (Sp) relativ zu störenden Geräuschen hervorheben zu können.

12. Verfahren nach Anspruch 11 oder 12, **dadurch gekennzeichnet, dass** die Vorrichtung (200) automatisch eine Wartung oder einen Betrieb erkennt, um dann eine Regel oder einen Filter automatisch zur Anwendung zu bringen.

## Claims

1. Device (200) comprising
- a machine tool (100) for machining gear-workpieces with a tool, the machine tool (100) comprising several numerically controlled drives,
- a machine control (50) which is designed to control the drives,
- a computer (10), which computer (10) is in communication connection with the machine tool (100) or which computer (10) can be brought in communication connection with the machine tool (100),
- at least one microphone (111), which microphone (111) is in communication connection with the computer (10 or which microphone (111) can be brought in communication connection with the computer (10),
- a speech recognition software (SW), which is executable on the computer (10), and which is designed to convert an analog voice input (Sp) into a digital voice input (SpD), which analog voice input (Sp) takes place by means of the at least one microphone (111),
- wherein the device (200) has a memory (11) for storing the digital voice input (SpD), **characterized in that**
- the speech recognition software (SW) is designed to treat the digital voice inputs (SpD) that are made during maintenance of the machine tool (100) and that are made and during an operation of the machine tool (100) differently.

2. Device (200) according to Claim 1,
**characterized in that**
a wireless connection (112) serves as a communication connection between the microphone (111) and the computer (10).

3. Device (200) according to Claim 1 or 2,
**characterized in that**
the microphone (111) can be worn on the body of a person.

4. Device (200) according to claim 1, 2 or 3,
**characterized in that** the microphone (111) itself comprises a noise suppression function and/or that software is available which allows to suppress the noise of the analog speech input (Sp) or the digital speech input (SpD).

5. Device (200) according to one of Claims 1 to 4,
**characterized in that** the machine control (50) is an autonomous machine control (50) which is designed to control the drives of the machine tool (100) without the involvement of the computer (10).

6. Device (200) according to claim 5,
**characterized in that**
the computer (10) is in communication connection (SI5) with the machine control (50) or can be brought in communication connection (SI5) with the machine control (50) in order to be able to transfer data from the computer (10) to the machine control (50) before machining gearwheel workpieces.

7. Device (200) according to one of Claims 1 to 4,
**characterized in that**
it can be connected to a further computer (13) by means of a communication connection (SI4) in such a way that the digital voice inputs (SpD) as a whole, or information obtained from the digital voice inputs (SpD), can be provided to the further computer (13).

8. Device (200) according to Claim 5, **characterized in that** a digital logbook with a collection of voice inputs is kept in the memory (11) of the device (200) and/or in the further computer (13).

9. Machine network that includes
- at least two devices (200) according to one of claims 1 to 4,
- another computer (13),
- a communication link (SI4) between a first of the at least two devices (200) and the further computer (13),
- a communication link (SI4) between a second of the at least two devices (200) and the further computer (13),
- an analysis software that is executable on the further computer (13), this analysis software being designed to evaluate the digital voice inputs (SpD).

10. Method for carrying out maintenance or repair of a device (200) which device (200) comprises a machine tool (100) for machining gearwheel workpieces with a tool, the method comprising the following steps:
- Activation of speech recognition software (SW) on a computer (10) which is assigned to the machine tool (100),
- Carrying out a maintenance or repair step on the machine tool (100),
- Recording of voice inputs (Sp) by voice input via a microphone (111) which is connected to the computer (10),
- Conversion of voice inputs (Sp) into digital voice inputs (SpD),
- Storing the digital voice inputs (SpD) in a memory (11),
- Making the digital voice inputs (SpD) available for processing and/or evaluation,
**characterized in that**
- the digital voice inputs (SpD) that are made during maintenance of the processing machine (100) and that are made during operation of the processing machine (100) are treated differently.

11. Method according to Claim 11,
**characterized in that**
when recording voice inputs (Sp), noise suppression is used in order to be able to emphasize the voice inputs (Sp) relative to disruptive noises.

12. Method according to Claim 11 or 12,
**characterized in that**
the device (200) automatically detects maintenance or operation in order to then automatically apply a rule or a filter.

## Revendications

1. Dispositif (200) comprenant
- une machine d'usinage (100) pour usiner des pièces de roue dentée à l'aide d'un outil, la machine d'usinage (100) comprenant plusieurs entraînements à commande numérique,
- une commande de machine (50) conçue pour commander les entraînements,
- un ordinateur (10) qui est ou qui peut être amené en liaison de communication avec la machine d'usinage (100),
- au moins un microphone (111) qui est ou qui peut être amené en liaison de communication avec l'ordinateur (10),
- un logiciel de reconnaissance vocale (SW) qui fonctionne sur l'ordinateur (10) et qui est conçu pour traduire une entrée vocale analogique (Sp) qui intervient par le biais du au moins un microphone (111) en une entrée vocale numérique (SpD),
le dispositif (200) comprenant une mémoire (11) pour mémoriser les entrées vocales numériques (SpD), **caractérisé en ce que** le logiciel de reconnaissance vocale (SW) est conçu pour traiter différemment les entrées vocales numériques (SpD) qui sont faites pendant l'entretien de la machine d'usinage (100) et celles qui sont faites pendant le fonctionnement de la machine d'usinage (100).

2. Dispositif (200) selon la revendication 1, **caractérisé en ce qu'**il est utilisé une liaison sans fil (112) comme liaison de communication entre le microphone (111) et l'ordinateur (10).

3. Dispositif (200) selon la revendication 1 ou 2, **caractérisé en ce que** le microphone (111) peut être porté sur le corps d'une personne.

4. Dispositif (200) selon la revendication 1, 2 ou 3, **caractérisé en ce que** le microphone (111) comprend lui-même une fonction de suppression de bruit et/ou **en ce que** le dispositif comprend un logiciel qui permet une suppression de bruit de l'entrée vocale analogique (Sp) ou de l'entrée vocale numérique (SpD).

5. Dispositif (200) selon l'une des revendications 1 à 4, **caractérisé en ce que** la commande de machine (50) est une commande de machine autonome (50) qui est conçue pour commander les entraînements de la machine d'usinage (100) sans intervention de l'ordinateur (10).

6. Dispositif (200) selon la revendication 5, **caractérisé en ce que** l'ordinateur (10) est ou peut être amené en liaison de communication (SI5) avec la commande de machine (50) pour pouvoir transmettre des données depuis l'ordinateur (10) à la commande de machine (50) avant l'usinage des pièces de roue dentée.

7. Dispositif (200) selon l'une des revendications 1 à 4, **caractérisé en ce qu'**il peut être raccordé à un autre ordinateur (13) au moyen d'une liaison de communication (SI4), de sorte que les entrées vocales numériques (SpD) peuvent être mises à disposition de l'autre ordinateur (13) dans leur totalité, ou bien sous formes d'informations qui ont été obtenues à partir des entrées vocales numériques (SpD).

8. Dispositif (200) selon la revendication 5, **caractérisé en ce qu'**il est stocké dans la mémoire (11) du dispositif (200) et/ou dans l'autre ordinateur (13) un fichier journal numérique avec une compilation des entrées vocales.

9. Réseau machine comprenant :
- au moins deux dispositifs (200) selon l'une des revendications 1 à 4,
- un autre ordinateur (13),
- une liaison de communication (SI4) entre un premier des au moins deux dispositifs (200) et l'autre ordinateur (13),
- une liaison de communication (SI4) entre un deuxième des au moins deux dispositifs (200) et l'autre ordinateur (13),
- un logiciel d'analyse qui fonctionne sur l'autre ordinateur (13), ce logiciel d'analyse étant conçu pour procéder à une analyse des entrées vocales numériques (SpD).

10. Procédé pour entretenir ou réparer un dispositif (200) qui comprend une machine d'usinage (100) destinée à usiner des pièces de roue dentée à l'aide d'un outil, le procédé comprenant les étapes suivantes :
- activer un logiciel de reconnaissance vocale (SW) sur un ordinateur (10) auquel est associée la machine d'usinage (100),
- procéder à l'étape d'entretien ou de réparation sur la machine d'usinage (100),
- enregistrer les entrées vocales (Sp) par saisie vocale via un microphone (111) qui est relié à l'ordinateur (10),
- convertir les entrées vocales (Sp) en entrées vocales numériques (SpD),
- enregistrer les entrées vocales numériques (SpD) dans une mémoire (11),
- mettre à disposition les entrées vocales numériques (SpD) pour traitement et/ou analyse, **caractérisé en ce que** les entrées vocales numériques (SpD) qui sont faites pendant l'entretien de la machine d'usinage (100) et celles qui sont faites pendant le fonctionnement de la machine d'usinage (100) sont traitées différemment.

11. Procédé selon la revendication 11, **caractérisé en ce que**, lors de l'enregistrement des entrées vocales (Sp), on utilise une suppression de bruit pour pouvoir accentuer les entrées vocales (Sp) par rapport aux bruits gênants.

12. Procédé selon la revendication 11 ou 12, **caractérisé en ce que** le dispositif (200) reconnaît automatiquement un entretien ou un fonctionnement pour appliquer ensuite automatiquement une règle ou un filtre.
